# EUROPÄISCHE PATENTSCHRIFT

(11) **EP 1 095 364 B1**
(45) Veröffentlichungstag und Bekanntmachung des Hinweises auf die Patenterteilung: **06.03.2002**
(21) Anmeldenummer: 99929200.6
(22) Anmeldetag: 15.06.1999
(51) Int. Cl.: G09B 19/06, G09B 5/06, G09B 7/04

(54) **VORRICHTUNG UND VERFAHREN ZUM TRAINIEREN DES SPRACHWISSENS**
LANGUAGE TRAINING DEVICE AND METHOD
PROCEDE ET DISPOSITIF POUR S'EXERCER A L'APPRENTISSAGE DES LANGUES

(30) Priorität: 30.06.1998 DE 19829040
(43) Veröffentlichungstag der Anmeldung: 02.05.2001
(73) Patentinhaber: Stankewitz, Roland, 19065 Pinnow (DE)
(72) Erfinder: Stankewitz, Roland, 19065 Pinnow (DE)
(74) Vertreter: Eisenführ, Speiser & Partner
(86) Internationale Anmeldenummer: EP9904081
(87) Internationale Veröffentlichungsnummer: WO0000944

(56) Entgegenhaltungen:
- DE-A- 3 640 405
- DE-A- 4 018 078
- DE-A- 4 217 271
- FR-A- 2 688 327
- US-A- 5 203 705

## Beschreibung

Die Erfindung betrifft eine Vorrichtung zum Trainieren des Sprachwissens, mit einem Speicher mindestens zur Speicherung von Vokabeln mindestens einer Sprache, wobei der Speicher eine Übersetzung der gespeicherten Vokabeln einer ersten Sprache in eine zweite Sprache enthält, mit einer Anzeige mindestens zur Darstellung der Vokabeln aus dem Speicher, mit einer Verarbeitungseinheit mindestens zur Steuerung des Speichers und der Anzeige. Weiterhin betrifft die Erfindung ein Verfahren zum Trainieren des Wissens.

Derartige Vorrichtungen sind aus dem Stand der Technik bekannt. So zeigt beispielsweise bereits die internationale Anmeldung PCT/US 95/06655 eine derartige Vorrichtung. Bei dieser bekannten Vorrichtung werden zu lernende Begriffe über eine Anzeige zur Darstellung für einen Benutzer der Vorrichtung gebracht. Die Darstellung des zu lernenden Begriffes verbleibt so lange in der Anzeige, bis der Benutzer mittels einer Eingabeeinheit an der Vorrichtung der Vorrichtung mitteilt, daß er den Begriff kennt bzw. daß er den Begriff nicht kennt. Weiterhin kann der Benutzer dieser bekannten Vorrichtung über die Eingabeeinheit der Vorrichtung mitteilen, daß er sich nicht sicher ist, ob er den zur Darstellung auf der Anzeige gebrachten Begriff kennt oder nicht kennt.

Nachteilig bei dieser als nächstliegender Stand der Technik anzusehenden Vorrichtung ist es, daß die Vorrichtung in Abhängigkeit von dem Verhalten des die Vorrichtung benutzenden Lernenden arbeitet. Die bekannten Vorrichtungen passen sich daher der Merkfähigkeit des Benutzers an, so daß sie nur geringe Anforderungen an den Benutzer stellen und somit auch nur einen geringen Lerneffekt aufweisen.

Aus der DE 40 18 079 A1 ist eine weitere bekannte Vorrichtung zum Trainieren des Sprachwissens bekannt. Diese bekannte Vorrichtung zeigt einen Speicher zur Speicherung von Vokabeln einer Sprache und eine Anzeige zur Darstellung von Vokabeln aus dem Speicher. Weiterhin ist eine Verarbeitungseinheit zur Steuerung des Speichers und der Anzeige vorgesehen. Bei dieser Druckschrift werden in einem automatischen Betrieb Lerneinheiten und/oder Korrespondenzen in vorgebbaren zeitlichen Abständen automatisch vom Lernsystem ausgegeben.

Nachteilig bei dieser bekannten Vorrichtung ist die schlechte Bedienbarkeit der Vorrichtung.

Aufgabe der Erfindung ist es daher, bei einer Vorrichtung der eingangs genannten Art die vorgenannten Nachteile zu vermeiden und eine Vorrichtung zur Verfügung zu stellen, bei der die Bedienbarkeit der Vorrichtung verbessert wird.

Diese Aufgabe wird bei einer Vorrichtung der eingangs genannten Art erfindungsgemäß gelöst durch ein Drehrad, wobei durch Drehung des Drehrades die Übersetzung der vor der Drehung des Drehrades in der Anzeige dargestellten Vokabeln zur Darstellung in der Anzeige bringbar ist.

Mit Hilfe des erfindungsgemäßen Drehrades kann ein Benutzer der erfindungsgemäßen Vorrichtung vorteilhafterweise durch einfache Drehung des Drehrades von der Anzeige einer Sprache in die Anzeige der entsprechenden Übersetzung dieser Sprache wechsein. Durch erneutes Weiterdrehen oder Zurückdrehen des Drehrades kann der Benutzer der erfindungsgemäßen Vorrichtung dann erneut die Anzeige der ursprünglich angezeigten Vokabel zur Darstellung bringen. Bei dieser Ausführungsform ist es besonders bevorzugt, wenn das erfindungsgemäße Drehrad mit der Quittierungstaste zum Quittieren einer gelernten Vokabel kombiniert ist. Dabei kann das Drehrad derart ausgebildet sein, daß es als Drucktaste ausgelegt ist. Somit wird durch einfaches Drücken des Benutzers auf das Drehrad die Quittierungsfunktion aktiviert. Somit kann die zu dem Zeitpunkt der Quittierung in der Anzeige dargestellte Vokabel als gelernt durch den Benutzer quittiert werden. Die Kombination von Drehrad und Quittierungstaste in dem Drehrad ist vorteilhaft, da der Benutzer den zur Bedienung des Drehrades benutzten Finger nicht von dem Drehrad nehmen muß. Die Bedienung der erfindungsgemäßen Vorrichtung wird daher stark vereinfacht.

Eine weitere bevorzugte Ausführungsform zeichnet sich durch eine Modustaste an der Vorrichtung aus. Mit Hilfe dieser Modustaste läßt sich die Funktion des Drehrades in einen Selektionsmodus überführen. in dem Selektionsmodus des Drehrades dient das Drehrad dazu, aus der in dem Speicher der Vorrichtung gespeicherten Vokabelliste eine Selektion von Vokabeln und somit eine Teilliste herauszuselektieren. Diese kann dann wiederum durch Drücken einer entsprechenden, an der erfindungsgemäßen Vorrichtung vorgesehenen Tastein den Speicher als selektierte Teilliste überführt werden. Anschließend kann mit Hilfe der Modustaste das Drehrad wieder in seine oben dargestellte, ursprüngliche Funktion zurückversetzt werden.

Die Vorteile der Erfindung liegen weiterhin darin, daß aufgrund der vorgegebenen Zeitintervalle die Vorrichtung völlig unabhängig von dem Verhalten des sie benutzenden Lernenden arbeitet. Der Lernende wird mit der erfindungsgemäßen Vorrichtung einem durch die vorgegebenen Zeitintervalle bei der Anzeige der Vokabeln ausgeübten Zwang ausgesetzt, die entsprechende Vokabel zu lernen. Der Lerneffekt mit Hilfe der erfindungsgemäßen Vorrichtung - die von dem Benutzer unabhängig ist - ist somit wesentlich größer als bei den bekannten Vorrichtungen aus dem Stand der Technik, da die Zeitintervalle, die von der Verarbeitungseinheit vorgegeben werden, derart bemessen *sind,* daß ein durchschnittlich begabter Benutzer der Vorrichtung an die. Grenzen seiner Lernfähigkeit gebracht wird und somit sein Sprachwissen maximal trainiert wird.

Eine vorteilhafte Ausführungsform der Erfindung zeichnet sich dadurch aus, daß während dem von der Verarbeitungseinheit vorgegebenen Zeitintervall jeweils mindestens eine Vokabel aus dem Speicher mit Hilfe eines Lautsprechers anstelle oder zusätzlich zu der Anzeige dem Lernenden mitgeteilt wird. Mit Hilfe dieser zusätzlichen akustischen Mitteilung, die auch an die Stelle der optischen Anzeige treten kann, läßt sich der Lerneffekt noch weiter verstärken.

Bei einer bevorzugten Ausführungsform der Erfindung schwanken die Zeitintervalle mit einer von der Verarbeitungseinheit vorgegebenen Periode in ihrer Länge. Dabei ist es besonders bevorzugt, wenn die Länge der Zeitintervalle periodisch in einem Tag/Nacht-Rhythmus schwankt. Auf diese Weise ist die erfindungsgemäße Vorrichtung den natürlichen Tag/Nachtschwankungen angepaßt, so daß bevorzugt kurze Zeitintervalle am Tage vorgegeben sind, während des Nachts beispielsweise ein achtstündiges Zeitintervall zwischengeschaltet ist, um es dem Benutzer zu erlauben, während dieser Zeit zu schlafen. Gegebenenfalls ist es auch angebracht, die Vorrichtung mit einer derart vorprogrammierten Verarbeitungseinheit zu versehen, die die Zeitintervalle darüber hinaus oder anstelle des Tag/Nacht-Rhythmusses mit einem Arbeitszeitrhythmus periodisch überlagert. Dabei ist es bevorzugt, daß während der üblichen Arbeitszeiten von beispielsweise 8 Uhr bis 12 Uhr und 13 Uhr bis 18 Uhr keine Veränderung der dargestellten Vokabel vorgenommen wird, aber während der anderen arbeitsfreien Zeiten kurze, beispielsweise Minutenintervalle zum Lernen der gespeicherten Vokabeln vorgegeben werden.

Eine weitere bevorzugte Ausführungsform der Erfindung zeichnet sich dadurch aus, daß die Zeitintervalle bis zu einem minimalen Zeitintervall kontinuierlich abnehmen. Auf diese Weise wird der Lerndruck auf den Benutzer des Lerngerätes weiter verstärkt. Auch läßt sich auf diese Weise eine Anpassung an die sich oftmals kontinuierlich verbessernde Merkfähigkeit des Benutzers erreichen, so daß der Benutzer von Anfang bis zum Ende der Benutzung der erfindungsgemäßen Vorrichtung sich subjektiv gleichmäßig gefordert fühlt. Bei dieser Ausführungsform kann auch ein Endzeitpunkt in der Speichereinrichtung gespeichert und von der Verarbeitungseinheit abrufbar sein, so daß die gesamten gespeicherten Vokabeln bis zu diesem Endzeitpunkt abgefragt werden, und gegebenenfalls bis zu diesem Endzeitpunkt auch mit kontinuierlich sich verkürzenden Zeitintervallen abgefragt werden.

Eine andere Ausführungsform der Erfindung zeichnet sich dadurch aus, daß im wesentlichen gleichzeitig mit der Darstellung einer Vokabel auf der Anzeige von der erfindungsgemäßen Vorrichtung ein optisches, akustisches oder mechanisches Signal mit Hilfe eines entsprechenden optischen, akustischen oder mechanischen Signalgebers abgegeben wird. Auf diese Weise wird ein möglicherweise abgelenkter Benutzer der erfindungsgemäßen Vorrichtung wieder zur Konzentration auf die Vorrichtung gebracht und somit durch diese weitergehenden Zwang zur Konzentration der Lerneffekt weiter erhöht. Dabei kann es sich um einmalige Signale oder um länger andauernde und durch eine entsprechende Signalabbruchtaste, die an der Vorrichtung vorgesehen ist, beendbare Signale handeln. Letztere Signale sind für den Benutzer besonders lästig, da er sie durch eigene Handlung beenden muß, um nicht unter kontinuierlicher Signalwirkung zu stehen.

Eine weitere vorteilhafte Ausführungsform der Erfindung weist eine Eingabeeinheit auf, mittels derer eines der vorgenannten Parameter, d.h. beispielsweise Länge eines Zeitintervalls zwischen zwei dargestellten Vokabeln, Periode der Schwankung der Länge der Zeitintervalle, Tag/Nacht-Rhythmus, Arbeitszeitrhythmus, minimales Zeitintervall, Endzeitpunkt der Darstellung von Vokabeln, Endanzahl von maximal angezeigten Vokabeln, oder Signalform in einem fest eingespeicherten Rahmen vorgebbar ist. Bei dieser Ausführungsform kann der Nutzer der erfindungsgemäßen Lernvorrichtung daher zumindest in gewissem Maße, d.h. beispielsweise innerhalb eines fest programmierten oder gespeicherten Rahmens, eine Anpassung an seine eigene Lernfähigkeit vornehmen.

Eine andere Ausführungsform der Erfindung weist eine Quittierungstaste auf, mit deren Hilfe ein Benutzer der erfindungsgemäßen Vorrichtung die Darstellung einer Vokabel auf der Anzeige beenden kann und eine weitere Vokabel zur Darstellung auf der Anzeige bringen kann. Die Quittierungstaste ist bevorzugt nur dann aktiv, wenn das Zeitintervall, während dem die zu lernende Vokabel angezeigt wird, noch nicht abgelaufen ist.

Bei einer anderen weiteren Ausführungsform der Erfindung ist in dem Speicher auch die jeweilige Übersetzung der gespeicherten Vokabeln der ersteh Sprache in eine zweite Sprache abgespeichert. Bei dieser weiteren Ausführungsform der Erfindung wird die Übersetzung in die zweite Sprache nach Ablauf des Zeitintervalls angezeigt, bevor erneut eine weitere Vokabel der ersten Sprache angezeigt wird. Mit Hilfe dieser Vorrichtung ist daher dem Benutzer eine Überprüfung seines Wissens anhand der gespeicherten Übersetzungen möglich.

Bei der zuvor beschriebenen Ausführungsform kann auch die bereits erwähnte Quittierungstaste derart mit der Verarbeitungseinheit und dem Speicher verbunden sein, daß die Übersetzung zur Darstellung auf der Anzeige gebracht wird, wenn die Quittierungstaste, während eine Vokabel der ersten Sprache in dem Zeitintervall auf der Anzeige aufscheint, gedrückt wird. Dabei ist es besonders vorteilhaft, wenn bei Ablauf des Zeitintervalls, ohne daß die Quittierungstaste gedrückt wurde, die derart unquittierte Vokabel als weiterhin nicht durch den Benutzer gelernt abgespeichert wird. Eine derartige Vokabel wird dann von der Verarbeitungseinheit gesteuert vermehrt vorgebracht, bis sie innerhalb des vorgegebenen Zeitintervalls durch die Quittierungstaste als bekannt quittiert wird.

Bei einer weiteren bevorzugten Ausführungsform, bei der auch die Übersetzung der angezeigten Vokabel in die zweite Sprache angezeigt wird, mit Hilfe eines erneuten Drückens der bereits erwähnten Quittierungstaste der Verarbeitungseinheit durch den Benutzer angezeigt, daß der Benutzer tatsächlich die richtige Übersetzung gelernt hatte. Eine derartig gelernte Vokabel wird anschließend nur noch mit einem wesentlichen größeren, dritten Zeitintervall von der Verarbeitungseinheit zwischen die noch unbekannten Vokabeln gestreut.

Bei einer anderen Bauausführung der vorliegenden Erfindung ist die Vorrichtung mit einer Schnittstelle versehen. Mit Hilfe dieser Schnittstelle kann über die Verarbeitungseinheit auf den Speicher der Vorrichtung zugegriffen werden. Somit kann mit Hilfe der Schnittstelle das in dem Speicher gespeicherte Wissen ausgetauscht, ausgelesen, eingelesen oder auf den neuesten Stand gebracht werden. Diese Ausführungsform istdahervorteilhafterweise kompatibel zu üblichen Personalcomputern.

Besonders vorteilhaft ist es auch, wenn das zu lernende Wissen seiner Bedeutung nach häufiger oder weniger häufig dem Lernenden optisch oder akustisch mitgeteilt wird. So ist es beispielsweise vorteilhaft, wenn bei dem Lernen einer Sprache dein Lernenden zunächst besonders häufig in der jeweils zu lernenden Sprache Verwendung findende Vokabeln angezeigt bzw. mitgeteilt werden. Auf diese Weise werden zunächst in der jeweiligen Sprache häufig benötigte Vokabeln eintrainiert, während weniger häufig im Alltag auftretende Vokabeln auch entsprechend weniger häufig von der Vorrichtung bzw. dem Verfahren der vorliegenden Erfindung abgefragt werden.

Weitere bevorzugte Ausführungsformen sind in den Unteransprüchen angegeben.

Zwei Ausführungsformen der Erfindung werden nun anhand der Zeichnung beschrieben.

Es zeigen:
Fig. 1 eine erste Ausführungsform der erfindungsgemäßen Vorrichtung:
Fig. 2 eine isometrische Ansicht einer zweiten Ausführungsform der erfindungsgemäßen Vorrichtung;
Fig. 3 eine Draufsicht auf die Vorrichtung der Fig. 2;
Fig. 4 eine Seitenansicht der Vorrichtung der Fig. 2; und
Fig. 5 eine hintere Seitenansicht der Vorrichtung der Fig. 2.

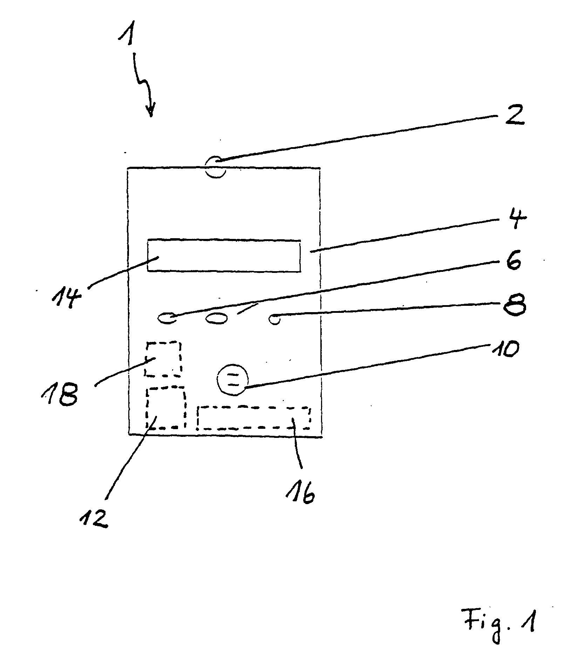

Die Fig. 1 der Zeichnung zeigt eine erste Ausführungsform der erfindungsgemäßen Vorrichtung. Diese Ausführungsform weist eine Verarbeitungseinheit 1 auf. Die Verarbeitungseinheit 1 weist ein Gehäuse 4 auf. Das Gehäuse 4 enthält eine Anzeige 14 zur Darstellung von in einem Speicher 16 gespeicherten Vokabeln. Zu diesem Zweck ist die Anzeige 14 über eine Verarbeitungseinheit 18 mit dem Speicher 16 verbunden. Die gesamte Vorrichtung 1 mit ihren Einzelheiten wird von einer Batterie 12 mit Energie versorgt.

In der Zeichnung unterhalb der Anzeige 14 dargestellt befinden sich eine Leuchtdiode 8 und ein Lautsprecher 10. Die Diode 8 bzw. der Lautsprecher 10 dienen der Abgabe eines optischen bzw. akustischen Signals bei Anzeige einer Vokabel auf der Anzeige 14. Neben der Leuchtdiode 8 sind Betriebsmodustasten 6 vorgesehen, mit deren Hilfe die von der Verarbeitungseinheit 18 vorgegebenen Zeitintervalle bei der Anzeige der Vokabeln in der Anzeige 14 in einem gewissen Rahmen an, beispielsweise einen bestimmten Tag-Nachtrhythmus anpaßbar sind.

An der Oberseite des in eine Hand passenden Gehäuses ist eine Quittierungstaste 2 vorgesehen. Mit Hilfe dieser Quittierungstaste läßt sich bei der dargestellten Vorrichtung die in der Anzeige 14 angezeigte Vokabel durch einen Benutzer als bekannt quittieren, wenn das von der Verarbeitungseinheit 18 vorgegebene Zeitintervall noch nicht abgelaufen ist.

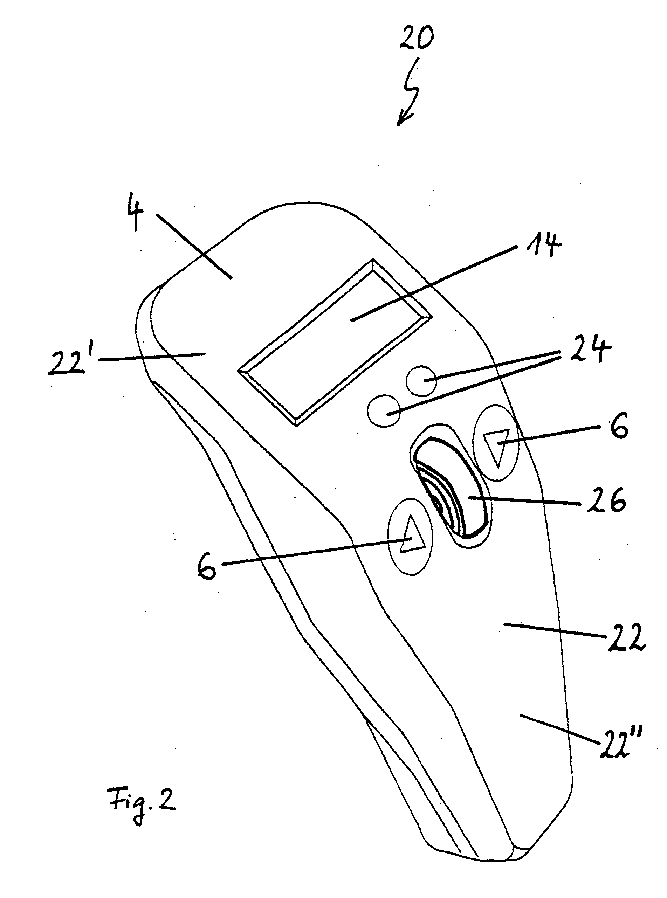

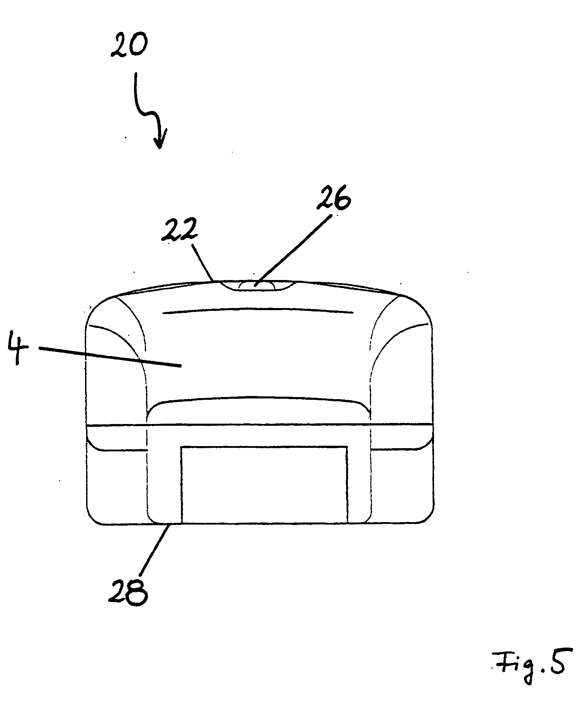

Die Fig. 2 zeigt eine zweite Ausführungsform der erfindungsgemäßen Vorrichtung in einer isometrischen Ansicht. Bei der dargestellten Vorrichtung 20 sind Teile, die mit den Teilen der Verarbeitungseinheit 1 gemäß Fig. 1 übereinstimmen, mit gleichen Bezugszeichen bezeichnet. Die Vorrichtung 20 weist ein Gehäuse 4 auf. Das Gehäuse 4 ist ergonomisch derart ausgebildet, daß es für die Handhabung durch die Hand eines Menschen optimal ausgebildet ist. Diese spezielle, ergonomische Ausbildung des Gehäuses 4 zur besseren Handhabung wird aus einer Gesamtschau der Fig. 2 bis 5 deutlich. Die Form des Gehäuses 4 der Vorrichtung 20, jedoch auch die im folgenden noch näher beschriebene Anordnung der einzelnen Bedienungselemente der Vorrichtung 20 ist derart gewählt, daß die Handhabung sowohl für einen Rechts- als auch für einen Linkshänder identisch ist.

Auf einer Oberseite 22 des Gehäuses 4 weist die Vorrichtung 20 eine Anzeige 14 auf. Die Anzeige 14 in der in der Fig. 2 oben dargestellten Hälfte 22' der Oberseite 22 des Gehäuses 4 vorgesehen. Die obere Hälfte 22' der Oberseite 22 ist gegenüber einer in der Fig. 2 unten dargestellten Hälfte 22" der Oberseite 22 um einen Winkel von etwa 35° abgewinkelt. Dadurch wird die unverkrampfte, ergonomisch günstige Handhabung der Vorrichtung 20 bzw. des Gehäuses 4 bei gleichzeitiger optimaler Ablesbarkeit der Anzeige 14 gewährleistet.

Weiterhin weist die Vorrichtung 20 auf der Oberseite 22 zwei Infrarotdioden 24 auf. Diese Infrarotdioden dienen zur Datenübertragung der in der Vorrichtung 20 gespeicherten Daten auf eine entsprechende andere (nicht dargestellte) Vorrichtung.

In der Fig. 2 unterhalb der Infrarotdioden 24 angeordnet befindet sich ein Drehrad 26. Das Drehrad 26 dient dazu, die jeweilige Übersetzung der in der Anzeige 14 von der Vorrichtung 20 vorgegebenen Vokabel zur Darstellung auf der Anzeige 14 zu bringen. Weiterhin dient das Drehrad 26 noch dazu, die in der Anzeige 14 dargestellte Übersetzung zu quittieren. Zu diesem Zweck drückt ein Benutzer der Vorrichtung 20 auf das Drehrad 26, welches mit einer integrierten (nicht dargestellten) Drucktaste versehen ist. Diese Drucktaste ist über eine (nicht dargestellte) elektrische Leitung mit dem (nicht dargestellten) Mikroprozessor der Vorrichtung 20 verbunden. Dieser Mikroprozessor sorgt dafür, daß die derart mit Hilfe der Druckbewegung auf das Drehrad 26 quittierte Übersetzung in dem (nicht dargestellten) Speicher als gewußt abgespeichert wird. Dabei unterscheidet der Mikroprozessor, ob die Übersetzung das erste Mal oder bereits zweimal, dreimal oder mehrmals zuvor quittiert, d.h. gewußt wurde. Je häufiger die Übersetzung einer Vokabel gewußt wurde, desto weniger oft erscheint die Vokabel auf der, Anzeige 14. Wird die Quittierung bereits bei Anzeige der zu übersetzenden Vokabel vorgenommen, so wird die nächste Vokabel angezeigt. Dabei hat der Benutzer jedoch keinen Einfluß, welche Vokabel als nächste angezeigt wird. In dem Mikroprozessor kann darüber hinaus vorgegeben werden, nach wievielen Quittierungen, d.h. nach wieviel Malen des Quittierens von Übersetzungen eine Vokabel bzw. deren Übersetzung als endgültig gelernt abgespeichert wird.

Weiterhin weist die Vorrichtung 20 auf der Oberseite 22 zwei Modustasten 6 auf. Diese Modustasten 6 dienen dazu, die jeweilige auf der Anzeige 14 zur Darstellung zu bringende Sprache auswählen zu können. Weiterhin dienen die Modustasten 6 dazu, verschiedene Funktionen des Drehrades 26 aufrufen zu können. Insbesondere kann mit Hilfe der Modustasten 6 die Funktion des Drehrades 26 dahingehend verändert werden, daß mit Hilfe der zuvor beschriebenen Dreh- und Druckbewegung eine bestimmte Liste von Vokabeln aus dem Speicher ausgewählt wird. Diese Liste kann dann anschließend bspw. an ein externes Gerät mit Hife der Infrarotdioden 24 per Datenübertragung übertragen werden. Bei dieser Liste kann es sich auch um eine Liste von mit Hilfe des Drehrades 26 als quittiert, d.h. gelernt in dem Speicher abgelegten Vokabein handeln. Bei der Liste kann es sich auch um eine Liste im Sinne einer Lektion handeln, d.h. um eine Liste von Vokabeln, die in einem gewissen Sinnzusammenhang stehen und daher eine Lerngruppe bilden.

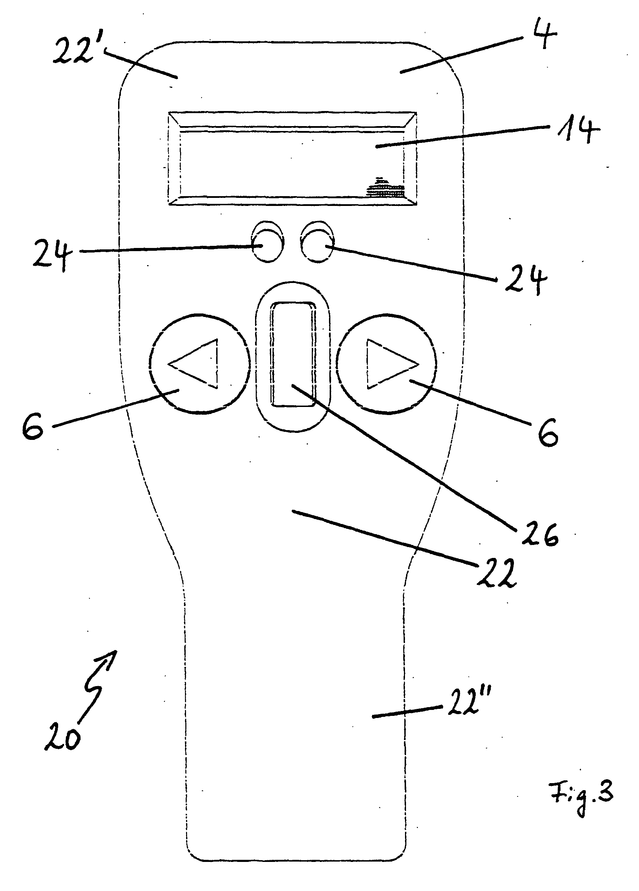

Die Fig. 3 zeigt eine Draufsicht auf die Vorrichtung 20 gemäß Fig. 2. Die Fig. 3 zeigt die an der Oberseite 22 vorgesehenen Anzeig- und Bedienungselemente gemäß der Vorrichtung 20 der Fig. 2. Zur optischen Unterstützung der Bedienung der Vorrichtung 20 sind die Anzeige- und Bedienelemente, insbesondere das Drehrad 26 farblich deutlich von der dunklen Farbgebung des Gehäuses 4 abgesetzt. Diese abgesetzte Farbgebung ist in den Zeichnungen nicht dargestellt.

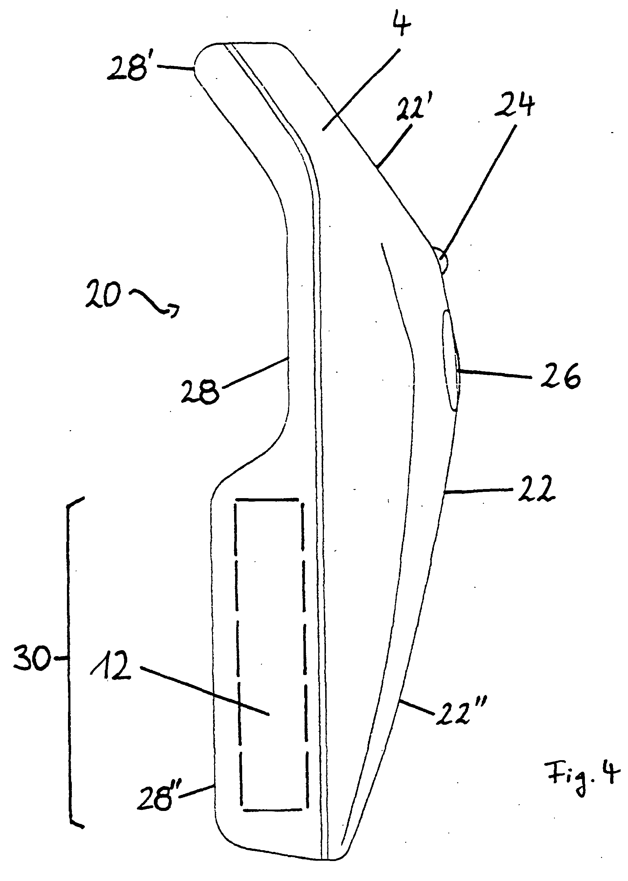

Die Fig. 4 zeigt eine Seitenansicht der Vorrichtung 20 gemäß Fig. 2. Die Seitenansicht gemäß Fig. 4 zeigt deutlich die ergonomisch günstige Formgebung des Gehäuses 4 der Vorrichtung 20. Insbesondere ist in der Fig. 4 im oberen Teil der Fig. die gebogene Formgebung des Gehäuses 4 an seiner Unterseite 28 dargestellt. Durch diese Formgebung ist eine optimale Positionierung der Finger der Hand eines Menschen in dem ausgehöhlten Bereich unterhalb des Drehrades 26 auf der Unterseite 28 der Vorrichtung 20 möglich.

In der Fig. 4 unterhalb des ausgeformten Bereiches der Unterseite 28 dargestellt ist ein verdickter Bereich 30. Dieser verdickte Bereich des Gehäuses 4 der Vorrichtung 20 enthält eine Batterie 12. Diese Anordnung der Batterie 12 in der Vorrichtung 20 kommt ergonomisch günstig im Handballen der Hand eines die Vorrichtung 20 benutzenden Menschen zu liegen. Somit ist der schwerste Bereich der Vorrichtung 20 in diesem Bereich angeordnet, was die Handhabung der Vorrichtung 20 leicht macht.

Die jeweiligen extremen Enden 28' bzw. 28" der Unterseite 28 sind so geometrisch zueinander angeordnet, daß das Gehäuse 4 bei einer Ablage auf einer ebenen Fläche, bspw, einem Schreibtisch, sicher flachzuliegen kommt, da der plane Abschnitt 28" der Unterseite 28, welcher sich unterhalb der Batterie 12 befindet, und der Abschnitt 28' der Unterseite 28 auf einer Ebene liegen. Auch bei einer derartigen Ablage auf einer horizontalen Ebene kann die Anzeige 14 durch ihre abgewinkelte Anordnung weiterhin von einem Benutzer gut abgelesen werden.

Der Richtungssinn der Anzeige 14 kann mit Hilfe der Modustasten 6 um 180° gedreht werden, um auch eine um 180° gedreht abgelegte Vorrichtung 20 noch ablesbar zu machen.

## Patentansprüche

1. Vorrichtung zum Trainieren des Sprachwissens,
mit einem Speicher (16) zur Speicherung von Vokabeln mindestens einer Sprache, wobei der Speicher (16) eine Übersetzung der gespeicherten Vokabeln einer ersten Sprache in eine zweite Sprache enthält,
mit einer Anzeige (14) zur Darstellung der Vokabeln aus dem Speicher (16),
mit einer Verarbeitungseinheit (18) zur Steuerung des Speichers (16) und der Anzeige (14),
**gekennzeichnet durch** ein Drehrad (26), wobei **durch** Drehung des Drehrades (26) die Übersetzung der vor der Drehung des Drehrades (26) in der Anzeige (14) dargestellten Vokabel zur Darstellung in der Anzeige (14) bringbar ist.

2. Vorrichtung nach Anspruch 1,
**dadurch gekennzeichnet, daß** die Anzeige (14) in von der Verarbeitungseinheit (18) vorgegebenen Zeitintervallen jeweils mindestens eine Vokabel aus dem Speicher (16) darstellt.

3. Vorrichtung nach Anspruch 2,
**dadurch gekennzeichnet, daß** die Zeitintervalle mit einer Periode in ihrer Länge schwanken.

4. Vorrichtung nach einem der Ansprüche 2 oder 3,
**dadurch gekennzeichnet, daß** die Zeitintervalle in Abhängigkeit von einem Tag-/ Nacht-Rhythmus in ihrer Länge schwanken.

5. Vorrichtung nach einem der Ansprüche 2 bis 4,
**dadurch gekennzeichnet, daß** die Zeitintervalle dem Rhythmus eines Arbeitstages angepaßt sind.

6. Vorrichtung nach einem der Ansprüche 2 bis 5,
**dadurch gekennzeichnet, daß** sich die Zeitintervalle bis zu einem minimalen Zeitintervall kontinuierlich verkürzen.

7. Vorrichtung nach einem der Ansprüche 2 bis 6,
**dadurch gekennzeichnet, daß** sich die Zeitintervalle bis zu einem Endzeitpunkt kontinuierlich verkürzen.

8. Vorrichtung nach einem der Ansprüche 2 bis 7,
**dadurch gekennzeichnet, daß** sich die Zeitintervalle kontinuierlich verkürzen, bis eine von der Verarbeitungseinheit vorgegebene Endanzahl von Vokabeln verbraucht ist.

9. Vorrichtung nach einem der Ansprüche 2 bis 8,
**dadurch gekennzeichnet, daß** die Vorrichtung im wesentlichen gleichzeitig mit der Darstellung einer Vokabel auf der Anzeige (14) ein optisches/akustisches/ mechanisches Signal mit Hilfe eines optischen/akustischen/mechanischen Signalgebers (8, 10) abgibt.

10. Vorrichtung nach Anspruch 9,
**dadurch gekennzeichnet, daß** das Signal in Abhängigkeit von der Programmierung der Verarbeitungseinheit (18) einmalig oder andauernd abgegeben wird.

11. Vorrichtung nach einem der Ansprüche 2 bis 10,
mit einer Eingabeeinheit (6),
**dadurch gekennzeichnet, daß** mittels der Eingabeeinheit (6) mindestens eines der Parameter Länge eines Zeitintervalls, Periode der Schwankung der Zeitintervalle, Tag-/Nacht-Rhythmus, Arbeitstagrhythmus, minimales Zeitintervall, Endzeitpunkt, Endanzahl von Vokabeln, Signalform vorgebbar ist.

12. Vorrichtung nach einem der vorstehenden Ansprüche,
**dadurch gekennzeichnet, daß** die zur Darstellung auf der Anzeige (14) zu bringenden Vokabeln mit Hilfe eines Zufallsgenerators ausgewählt werden.

13. Vorrichtung nach einem der vorstehenden Ansprüche,
**gekennzeichnet durch** eine Quittierungstaste (2), mit deren Hilfe ein Benutzer der Vorrichtung (1) die Darstellung einer Vokabel auf der Anzeige (14) beenden und eine andere Vokabel zur Darstellung auf der Anzeige (14) bringen kann.

14. Vorrichtung nach Anspruch 2, 13 und nach einem der vorstehenden Ansprüche,
**dadurch gekennzeichnet, daß** die Quittierungstaste (2) nur so lange aktiv ist, so lange das Zeitintervall noch nicht abgelaufen ist.

15. Vorrichtung nach einem der Ansprüche 2 bis 14,
**dadurch gekennzeichnet, daß** die Übersetzung in die zweite Sprache nach Ablauf des Zeitintervalls auf der Anzeige (14) für ein zweites Zeitintervall dargestellt wird, bevor erneut eine Vokabel der ersten Sprache angezeigt wird.

16. Vorrichtung nach den Ansprüchen 13 und 15 und mindestens einem der
vorstehenden Ansprüche,
**dadurch gekennzeichnet, daß** mit Hilfe der Quittierungstaste (2) die Übersetzung in die zweite Sprache zur Darstellung auf der Anzeige (14) bringbar ist.

17. Vorrichtung nach Anspruch 16,
**dadurch gekennzeichnet, daß** die Übersetzung in die zweite Sprache nur in die Anzeige (14) bringbar ist, wenn das Zeitintervall der Darstellung der Vokabel in der ersten Sprache noch nicht abgelaufen ist.

18. Vorrichtung nach den Ansprüchen 13 und 15 und einem der vorstehenden Ansprüche,
**dadurch gekennzeichnet, daß** durch ein Drücken der Quittierungstaste (2) während der Darstellung der Vokabel der zweiten Sprache auf der Anzeige (14) in dem zweiten Zeitintervall dieses Wort von der Verarbeitungseinheit (18) als bekannt abgespeichert wird.

19. Vorrichtung nach Anspruch 18,
**dadurch gekennzeichnet, daß** die als bekannt abgespeicherte Vokabel von der Verarbeitungseinrichtung (18) mit einem dritten Zeitintervall mit längerer Periode anstelle der noch nicht angezeigten oder nicht quittierten Vokabeln auf der Anzeige (14) dargestellt wird.

20. Vorrichtung nach Anspruch 13 und nach einem der vorstehenden Ansprüche,
**dadurch gekennzeichnet, daß** die Quittierungstaste (2) in das Drehrad (26) integriert ist, so daß durch Drücken des Drehrades (26) die Quittierungsfunktion der Quittierungstaste (2) auslösbar ist.

21. Vorrichtung nach Anspruch 20,
**gekennzeichnet durch** eine Modustaste (6) für das Drehrad (26), mittels derer der Modus des Drehrades (26) in einen Selektionsmodus bringbar ist, wobei im Selektionsmodus das Drehrad (26) als Auswahlmittel zur Erstellung einer Auswahlliste der in dem Speicher 16 gespeicherten Vokabeln dient.

22. Vorrichtung nach einem der vorstehenden Ansprüche,
**gekennzeichnet durch** eine Infrarotschnittstelle (24), mit deren Hilfe die in dem Speicher (16) gespeicherten Vokabeln oder ein Teil derselben an entsprechende Empfangsgeräte übertragbar sind.

## Claims

1. A device for language training comprising
a memory (16) for storing words in at least one language, wherein the memory (16) includes a translation of the stored words in a first language into a second language,
a display (14) for representing the words from the memory (16), and
a processing unit (18) for controlling the memory (16) and the display (14),
**characterised by** a rotary wheel (26), wherein by rotation of the rotary wheel (26) the translation of the word represented in the display (14) prior to the rotation of the rotary wheel (26) can be represented in the display (14).

2. A device according to claim 1 **characterised in that** the display (14) respectively represents at least one word from the memory (16) in time intervals which are predetermined by the processing unit (18).

3. A device according to claim 2 **characterised in that** the time intervals fluctuate in length with a period.

4. A device according to one of claims 2 and 3 **characterised in that** the time intervals fluctuate in length in dependence on a day/night pattern.

5. A device according to one of claims 2 to 4 **characterised in that** the time intervals are adapted to the rhythm of a working day.

6. A device according to one of claims 2 to 5 **characterised in that** the time intervals are continuously shortened to a minimum time interval.

7. A device according to one of claims 2 to 6 **characterised in that** the time intervals are continuously shortened to an end moment in time.

8. A device according to one of claims 2 to 7 **characterised in that** the time intervals are continuously shortened until an end number of words predetermined by the processing unit has been used up.

9. A device according to one of claims 2 to 8 **characterised in that** substantially simultaneously with the representation of a word on the display (14) the device emits an optical/acoustic/mechanical signal by means of an optical/acoustic/mechanical signal generator (8, 10).

10. A device according to claim 9 **characterised in that** the signal is emitted once or continuously in dependence on the programming of the processing unit (18).

11. A device according to one of claims 2 to 10 **characterised in that** at least one of the parameters comprising the length of a time interval, the period of the fluctuation in the time intervals, the day/night rhythm, the working day rhythm, the minimum time interval, the end moment in time, the end number of words and the signal form can be predetermined by means of the input unit (6).

12. A device according to one of the preceding claims **characterised in that** the words to be represented on the display (14) are selected by means of a random generator.

13. A device according to one of the preceding claims **characterised by** an acknowledgement button (2), by means of which a user of the device (1) can terminate the representation of a word on the display (14) and cause another word to be represented on the display (14).

14. A device according to claim 2, claim 13 and one of the foregoing claims, **characterised in that** the acknowledgement button (2) is only active as long as the time interval has not yet expired.

15. A device according to one of claims 2 to 14 **characterised in that** after the expiry of the time interval the translation into the second language is represented on the display for a second time interval before a word in the first language is displayed again.

16. A device according to claims 13 and 15 and at least one of the preceding claims **characterised in that** the translation into the second language can be represented on the display (14) by means of the acknowledgement button (2).

17. A device according to claim 16 **characterised in that** the translation Into the second language can be caused to appear in the display (14) only when the time interval of the representation of the word in the first language has not yet expired.

18. A device according to claims 13 and 15 and one of the preceding claims **characterised in that** by pressing the acknowledgement button (2) during the representation of the word in the second language on the display (14) in the second time interval that word is stored as being known by the processing unit (18).

19. A device according to claim 18 **characterised in that** the word stored as known is represented on the display (14) by the processing device (18) with a third time interval of a longer period instead of the words which have not yet been displayed or not yet acknowledged.

20. A device according to claim 13 and one of the preceding claims **characterised in that** the acknowledgement button (2) is integrated into the rotary wheel (26) so that the acknowledgement function of the acknowledgement button (2) can be triggered by pressing the rotary wheel (26).

21. A device according to claim 20 **characterised by** a mode key (6) for the rotary wheel (26), by means of which the mode of the rotary wheel (26) can be put into a selection mode, wherein in the selection mode the rotary wheel (26) serves as a selection means for creating a selection list of the words stored in the memory (16).

22. A device according to one of the preceding claims **characterised by** an infra-red interface (24) by means of which the words stored in the memory (16) or a part thereof can be transmitted to corresponding receiving devices.

## Revendications

1. Dispositif d'entraînement des connaissances linguistiques,
pourvu d'une mémoire (16) permettant d'enregistrer les mots d'au moins une langue, la mémoire (16) contenant une traduction des mots enregistrés d'une première langue vers une seconde langue,
pourvu d'un affichage (14) permettant la visualisation des mots enregistrés en mémoire (16),
pourvu d'une unité de traitement (18) assurant la commande de la mémoire (16) et de l'affichage (14),
**caractérisé par** une molette (26) qui, chaque fois qu'elle est tournée, cause le remplacement du mot visualisé à l'affichage (14) avant de tourner la molette (26) par le mot traduit correspondant.

2. Dispositif selon la revendication 1,
**caractérisé en ce que** l'affichage (14) visualise au moins un des mots enregistrés en mémoire (16) à des intervalles de temps déterminés par l'unité de traitement (18).

3. Dispositif selon la revendication 2,
**caractérisé en ce que** la longueur des intervalles de temps fluctue selon une période.

4. Dispositif selon l'une quelconque des revendications 2 ou 3,
**caractérisé en ce que** les intervalles de temps varient en longueur selon un rythme de jour et de nuit.

5. Dispositif selon l'une quelconque des revendications 2 à 4,
**caractérisé en ce que** les intervalles de temps sont adaptés au rythme d'une journée de travail.

6. Dispositif selon l'une quelconque des revendications 2 à 5,
**caractérisé en ce que** les intervalles de temps diminuent continuellement jusqu'à atteindre une longueur minimum.

7. Dispositif selon l'une quelconque des revendications 2 à 6,
**caractérisé en ce que** les intervalles de temps diminuent continuellement jusqu'à un moment final.

8. Dispositif selon l'une quelconque des revendications 2 à 7,
**caractérisé en ce que** les intervalles de temps diminuent continuellement jusqu'à épuisement d'un nombre de mots fixé auparavant par l'unité de traitement.

9. Dispositif selon l'une quelconque des revendications 2 à 8,
**caractérisé en ce qu'**un signal optique/acoustique/mécanique soit donné par un émetteur de signaux (8, 10), au moment précis de la visualisation d'un mot à l'affichage (14).

10. Dispositif selon la revendication 9,
**caractérisé en ce que** le signal est émis une seule fois ou de manière permanente, selon le mode de programmation de l'unité de traitement (18).

11. Dispositif selon l'une quelconque des revendications 2 à 10,
pourvu d'une unité d'entrée de données (6),
**caractérisé en ce que** ladite unité d'entrée de données (6) permet de définir auparavant au moins un des paramètres du groupe comprenant la longueur d'un intervalle de temps, la période de fluctuation de ces intervalles de temps, le rythme de jour et de nuit, le rythme de journée de travail, l'intervalle de temps minimum, le moment final, le nombre final de mots et la forme du signal.

12. Dispositif selon l'une quelconque des revendications précédentes,
**caractérisé en ce que** les mots destinés à êtres visualisés à l'affichage (14) sont choisis au moyen d'un générateur de nombres aléatoires.

13. Dispositif selon l'une quelconque des revendications précédentes,
**caractérisé par** une touche d'acquittement (2) permettant à l'utilisateur du dispositif (1) de mettre fin à la visualisation d'un mot à l'affichage (14) et de faire apparaître un autre mot au dit affichage (14).

14. Dispositif selon la revendication 2, 13 et selon l'une quelconque des revendications précédentes,
**caractérisé en ce que** la touche d'acquittement (2) n'est active que durant la durée de l'intervalle de temps.

15. Dispositif selon l'une quelconque des revendications 2 à 14,
**caractérisé en ce que**, une fois l'intervalle de temps écoulé, le traduction vers la seconde langue soit visualisée à l'affichage (14) durant un second intervalle de temps, avant que ne soit affiché à nouveau un mot de la première langue.

16. Dispositif selon les revendications 13 et 15 et selon l'une quelconque des revendications précédentes,
**caractérisé en ce que** la touche d'acquittement (2) permette la visualisation de la traduction vers la seconde langue à l'affichage (14).

17. Dispositif selon la revendication 16,
**caractérisé en ce que** la traduction vers la seconde langue ne peut être visualisée à l'affichage (14) qu'aussi longtemps que l'intervalle de temps de la représentation du mot dans la première langue n'est pas écoulé.

18. Dispositif selon les revendications 13 et 15 et selon l'une quelconque des revendications précédentes,
**caractérisé en ce que**, lorsque l'on appuie sur la touche d'acquittement (2) durant la visualisation du mot dans la seconde langue à l'affichage (14) au cours du second intervalle de temps, ledit mot est enregistré par l'unité de traitement (18) comme étant connu.

19. Dispositif selon la revendication 18,
**caractérisé en ce que** le mot enregistré en tant que connu est visualisé par l'unité de traitement (18) à l'affichage (14) durant un troisième intervalle de temps de période plus longue, à la place des mots non encore affichés ou non acquittés.

20. Dispositif selon la revendication 13 et selon l'une quelconque des revendications précédentes,
**caractérisé en ce que** la touche d'acquittement (2) est intégrée dans la molette (26), de manière qu'une pression sur la molette (26) déclenche la fonction d'acquittement de la touche d'acquittement (2).

21. Dispositif selon la revendication 20,
**caractérisé par** une touche de mode (6) liée à la molette (26), permettant de changer la fonction de la molette (26) à un mode de sélection dans lequel ladite molette (26) sert de moyen de sélection permettant d'établir une liste de choix des mots enregistrés en mémoire (16).

22. Dispositif selon l'une quelconque des revendications précédentes,
**caractérisé par** une interface infrarouge (24) permettant de transmettre les mots enregistrés en mémoire (16), ou une partie de ces mots, vers des récepteurs adaptés.
